# EUROPEAN PATENT SPECIFICATION

(11) **EP 3 599 788 B1**
(45) Date of publication and mention of the grant of the patent: **08.05.2024**
(21) Application number: 19197699.2
(22) Date of filing: 17.05.2011
(51) Int. Cl.: H04W 28/08, H04W 48/18, H04W 88/06, H04W 28/18

(54) **METHOD AND APPARATUS FOR COMMUNICATING VIA A GATEWAY**
VERFAHREN UND VORRICHTUNG ZUR KOMMUNIKATION ÜBER EIN GATEWAY
PROCÉDÉ ET APPAREIL POUR COMMUNIQUER PAR L'INTERMÉDIAIRE D'UNE PASSERELLE

(30) Priority: 28.06.2010 GB 201010821
(43) Date of publication of application: 29.01.2020
(62) Divisional of application: 11800232.8
(73) Proprietor: Nokia Technologies Oy, 02610 Espoo (FI)
(72) Inventor: KOKKINEN, Heikki, 00180 Helsinki (FI); RINNE, Mika, 02320 Espoo (FI); KEKKI, Sami, Helsinki 00420 (FI)
(74) Representative: Laine IP Oy

(56) References cited:
- WO-A1-2008/060208
- US-A1- 2009 232 019

## Description

### TECHNICAL FIELD

The present application relates generally to mobile communications and local-area network connectivity.

### BACKGROUND

Parallel to a proliferation of cellular communications, a proliferation of local-area communications has been observed. Whereas cellular communications take place over cellular networks covering large areas, even entire countries or substantial sections thereof, local-area networks may be employed to offer connectivity in specific high-volume locations such as homes, enterprises, railway stations or department stores.

Local-area networks may be bundled with cellular networks, so that one operator offers connectivity via both options. Some local-area cells may cover areas that are comparable in size to medium-sized cellular cells. Typically local-area cells are isolated, while cellular networks support handovers whereby mobile terminals can roam from one cell to another without experiencing a substantial discontinuity in service.

Local area networks may be suited to high-volume traffic such as downloading or streaming. Operators may desire to compile statistics on subscriber behaviour. In some cases, cellular traffic may be voice-centric and local-network traffic may be data-centric. Data-centric traffic may be conveyed as internet protocol, IP, traffic, for example. Statistics such as traffic volume or talk times may be used as a basis for billing subscribers.

Document US2009/232019 A1 discloses providing multiple levels of service for wireless communication, wherein local breakout is provided by one or more nodes, such as local access point or a local gateway. Multiple IP points of presence relating to different levels of service may be provided for an access point. An access terminal may inform an access point of a level of service, and the access point determines how to send a packet. Document WO 2008/060208 A1 relates to a gateway selection mechanism for Interworking- Wireless Local Area Network (I-WLAN) and evolutions of the Universal Mobile Telecommunications System (UMTS).

### SUMMARY

Various aspects of examples of the invention are set out in the claims.

According to a first aspect of the present invention, there is provided a system comprising a user equipment, the user equipment being configured to establish connectivity to a local area network, to at least receive a traffic template, wherein the traffic template defines local route traffic to be tunnelled from the user equipment to an operator gateway, route local route traffic matching the traffic template from the user equipment to the operator gateway, and send local route traffic not matching the traffic template directly to an external network, the system further comprising a gateway selection function configured to receive, from the user equipment, information relating to the local area network, query, using the information relating to the local area network, a database for a method to control the local area network, and providing the traffic template to the user equipment based on no method being received from the database.

According to a second aspect of the present invention, there is provided a method, comprising establishing, at a user equipment, connectivity to a local area network, receiving a traffic template at the user equipment, wherein the traffic template defines local route traffic to be tunnelled from the user equipment to an operator gateway, routing local route traffic matching the traffic template from the user equipment to the operator gateway, and sending local route traffic not matching the traffic template directly to an external network, receiving, at a gateway selection function, from the user equipment, information relating to the local area network, querying, by the gateway selection function, using the information relating to the local area network, a database for a method to control the local area network, providing the traffic template to the user equipment based on no method being received from the database.

### BRIEF DESCRIPTION OF THE DRAWINGS

For a more complete understanding of example embodiments of the present invention, reference is now made to the following descriptions taken in connection with the accompanying drawings in which:
FIGURE 1 illustrates data traffic according to an example embodiment of the present invention;
FIGURE 2 illustrates an example apparatus 201 capable of supporting embodiments of the present invention.;
FIGURE 3 illustrates data traffic according to an example embodiment of the present invention.
FIGURE 4 illustrates data traffic according to an example embodiment of the present invention.
FIGURE 5 is a flowchart of a process in a user equipment according to an example embodiment of the invention;
FIGURE 6 is a flowchart of a process in a gateway selection function according to an example embodiment of the invention;
FIGURE 7 is a signaling diagram relating to an example embodiment of the invention.

### DETAILED DESCRIPTON OF THE DRAWINGS

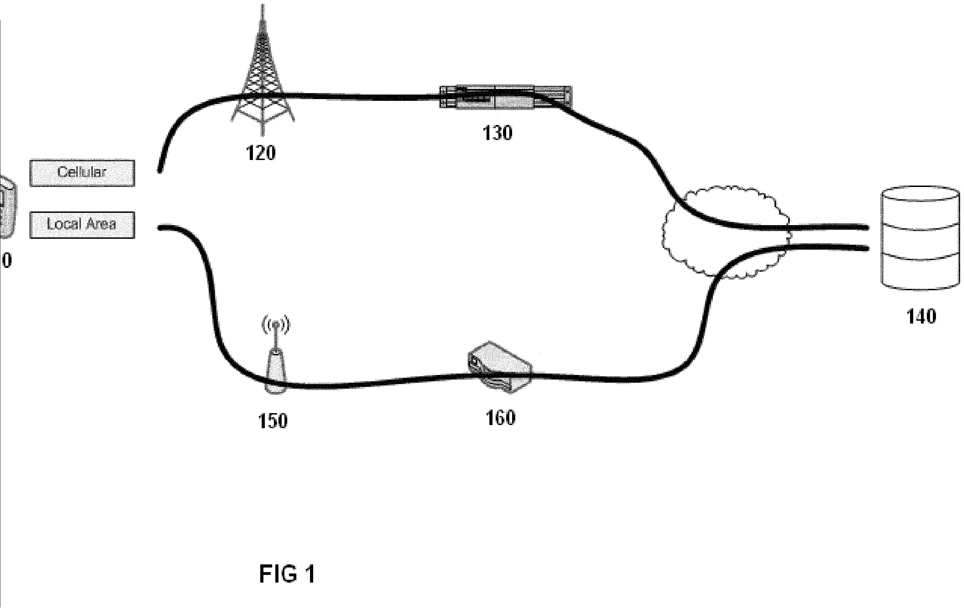

An example embodiment of the present invention and its potential advantages are understood by referring to FIGURES 1 through 7 of the drawings.

FIGURE 1 illustrates data traffic according to an example embodiment of the present invention. FIG 1 illustrates a user equipment, UE, 110, which may be for example a mobile phone, smartphone, communicator, Internet tablet, cellular organizer, personal digital assistant with wireless connectivity or another wireless user device. The UE may be configured to enable it's user to access information on the Internet 140. According to a first option, the UE enables it's user to access information on an external network such as, for example, the Internet 140 via a cellular communication route, which goes through a cellular base station 120. Base station 120 may be a base station according to wideband code division multiple access, WCDMA, technology, known as a node-B. WCDMA may include high speed packet access, HSPA, technology as well. Base station 120 may be alternatively be a base station according to long term evolution, LTE, technology, known as an eNB. Base station 120 may alternatively conform to other standards, such as GSM, IS-95, cdma2000 or to a combination of two or more technologies. Cellular gateway 130 may be configured between base station 120 and internet 140. Cellular gateway 130 may be controlled by an operator of a cellular network wherein it and base station 120 are comprised. Cellular gateway 130 may be configured to provide mobility services. Cellular gateway 130 may be configured to collect statistics of use for cellular subscribers. For example, cellular gateway 130 may record the volume of traffic a subscriber uploads to or downloads from the Internet 140. Alternatively or in addition the time-of-day of data usage may be recorded and access to certain domains may be restricted by cellular gateway 130. For example, a subscription purchased for a child may be configured to disallow access to gambling services. In general, cellular gateway 130 may be configured to enable an operator to control flows of data between subscribers and external networks such as Internet 140. Cellular gateway 130 may also provide configurations related to policy control, routing or charging options. Cellular gateway 130 may be configured to cause traffic shaping, traffic flow quality of service labeling and/or traffic flow quality control. Cellular gateway 130 may include a user context profile that allows discretisation of the user from other users, or the traffic of a user from the traffic of other users. The user context profile may further include differentiation for the traffic flows based on profiles derived from the subscription information, for example the mentioned restriction on gambling.

According to a second option, UE 110 enables it's user to access information on an external network such as, for example, the Internet 140 via a local route of a local area network. The local route comprises a local access point 150, which may be a wireless local area network, WLAN, access point, a 3^{rd} generation partnership project, 3GPP, local internet protocol access, LIPA, access point or an access point or base station according to another local connectivity technology. In addition or alternatively to a wireless access point, local access point 150 may be a wire-line access such as, for example, a LAN/Ethernet connection or a serial port. The local route may also comprise a local gateway 160, which may be configured to control, enable and/or restrict traffic between UE 110 and external networks such as, for example, the Internet 140. Local gateway 160 may collect statistics on usage of the local route. The operator of the local route may desire the statistics to be able to invoice cellular operators for traffic incurred by their subscribers along the local route, for example.

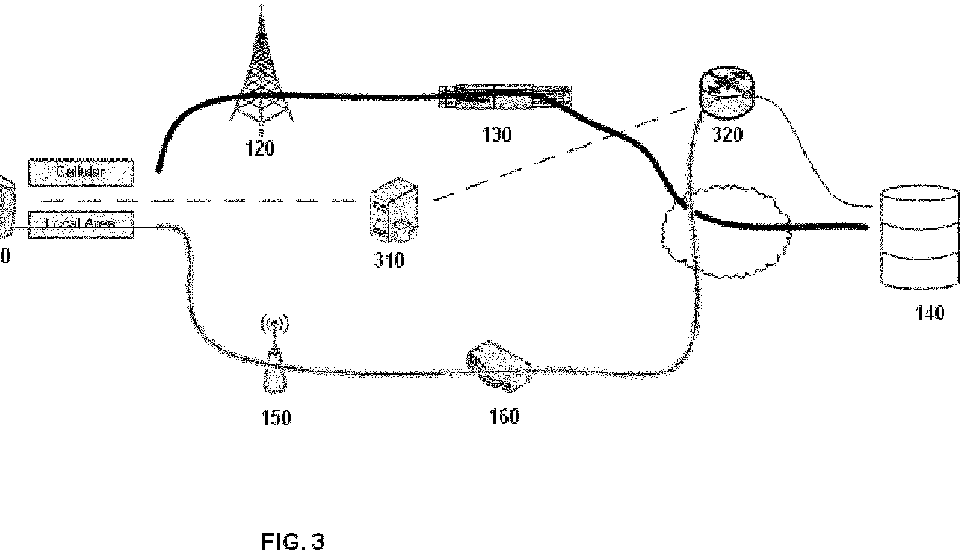

FIGURE 3 illustrates data traffic according to an example embodiment of the present invention. Reference numerals and units 110, 120, 130, 140, 150 and 160 in FIG. 3 substantially correspond to like reference numerals and units in FIG. 1. FIG. 3 additionally illustrates a gateway selection function, GWSF, 310. GWSF 310 may be comprised in the core part of the cellular network, in detail in a home network of the subscriber of UE 110. GWSF may alternatively be comprised in a visited network of the subscriber of UE 110. GWSF 310 may be configured to communicate with UE 110 and an operator gateway 320, which may be owned by an operator of a cellular network, for example. GWSF 310 may be configured to cause local data traffic of UE 110, that is, the traffic to and from UE 110 that is communicated via the local route, to be routed via the operator gateway 320. Routing may be accomplished by tunneling, for example. When local data traffic of UE 110 is routed via the operator gateway 320, the operator gateway controls, enables and/or restricts traffic between UE 110 and external networks such as, for example, the Internet 140. In the arrangement illustrated in FIG 3, therefore, both local gateway 160 and operator gateway 320 may control local traffic of UE 110. In this case, both local and cellular operators have control over the local traffic of UE 110. Local traffic, which may be data intensive, is routed through both the local route and a cellular core network, which causes network load and possibly adds delay.

GWSF 310 may accomplish causing local data of UE 110 to be routed to operator gateway 320 by signaling to UE 110 that an address of operator gateway 320 must be used for all outgoing traffic, for example. Directing traffic between the local gateway 160 and an operator gateway 320 may happen based on the routing policies, and its actual implementation may be based on tunneled transport between the local gateway 160 and the operator gateway 320. Traffic may be divided into tunneled and non-tunneled traffic based on traffic flow attributes such as, for example, a port number and/or an IP quintuple comprising a source address, a destination address, a source port, a destination port and a traffic class. Traffic may also or alternatively be divided based on traffic statistics, subscription information, or traffic offload policy definitions, for example. GWSF 310 may be configured to provide at least one filter comprising criteria for allocating traffic to tunneled and non-tunneled traffic. GWSF 310 may be configured to provide the at least one filter to the local gateway 160.

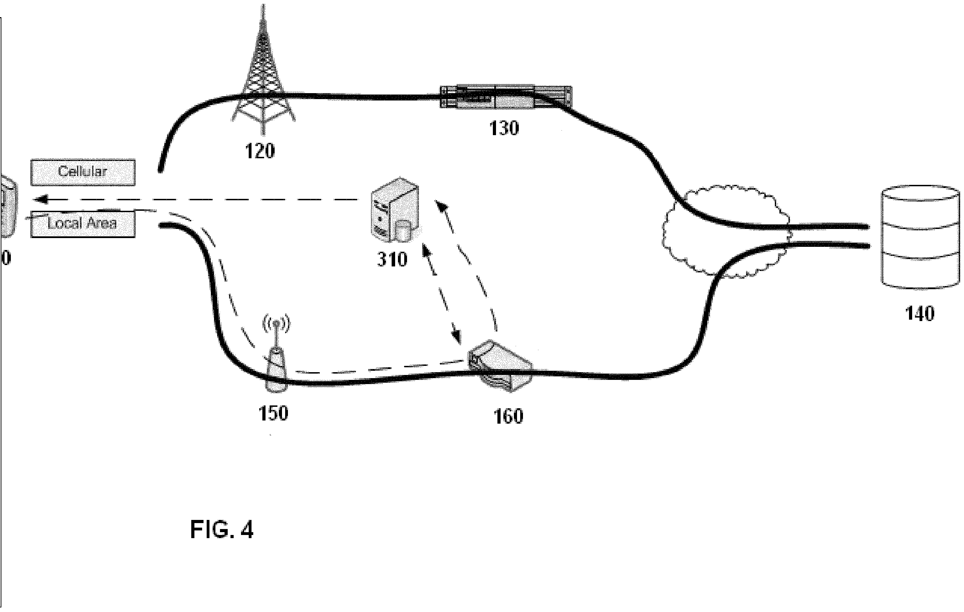

FIGURE 4 illustrates data traffic according to an example embodiment of the present invention. Reference numerals and units 110, 120, 130, 140, 150, 160 and 310 in FIG. 4 substantially correspond to like reference numerals and units in FIG. 1 and FIG. 3.

Compared to FIG. 3, the arrangement of FIG. 4 omits the operator gateway 320 of FIG. 3. Some functions of the operator gateway 320 are implemented instead in local gateway 160 as will be described hereinbelow. GWSF 310 may be arranged to communicate with UE 110 and local gateway 160. GWSF 310 may be owned or operated by a cellular operator, or be in substantial communication with a cellular operator allowing the cellular operator access to information contained in GWSF 310. When UE 110 uses the local route in the illustrated embodiment, UE 110 may initially obtain information on a local area network accessible to it, for example from an apparatus in a cellular network tasked to assist cellular terminals to find local area networks. Alternatively, the UE 110 may scan for local area networks itself and attempt to attach to a local area network discovered in such a scan. UE 110 may also be pre-provisioned with lists of preferred local area networks.

After UE 110 connects to the local route, it may obtain information on the local area network. This information may comprise at least one of: an internet protocol, IP, address of UE 110 via the local area network, a network mask, a default gateway identity, a name-to-address mapping server identity, a local area network identity, and location information. A network mask may comprise a part of an IP address that defines a set of IP addresses comprised in the local area network. A default gateway identity may comprise an identity of local gateway 160, for example. The identity of a default gateway may be presented as an IP address or fully qualified domain name, FQDN, for example. A name-to-address mapping server identity may be a domain name system, DNS, server identity, for example. A name-to-address mapping server may be specific to the local area network or a server hosted by another network. A local area network identity may enable to uniquely identify which local area network the local route accessed by UE 110 is comprised in. A local area network identity may comprise a service set identifier, SSID, or another kind of network identifier. Location information may comprise an indication of a location of UE 110, or a location of local access point 150, for example. UE 110 may store at least part of the information on the local area network into memory comprised in UE 110. The memory may be e.g. DRAM, SDRAM or magnetic media memory.

After obtaining information on the local area network, UE 110 may contact a GWSF 310 and provide at least a part, and in some embodiments all, of the obtained information to GWSF 310. The terminal may provide the information via the local route or via the cellular route, depending on the embodiment. When providing information via the cellular route, the local area network is not capable of modifying the information en route, which may increase the level of control a cellular operator has.

GWSF 310 may compare a provided IP address to one that is indicated as a source of the information, for example indicated in a lower layer header such as an IP header. If the information was provided via the local route and the addresses do not match, GWSF 310 may be configured to stop processing the information. Alternatively responsive to the provided address and the indicated address not matching, GWSF 310 may be configured to contact the indicated address and to request information. GWSF 310 may be configured to access a database to compare provided information with information in the database to determine whether the database comprises information relating to the local area network UE 110 is attached to. The database may comprise information on local area networks that GWSF 310 is enabled to control and/or configure. The database may comprise methods capable of controlling or configuring gateways such as, for example, local gateway 160. Methods capable of controlling or configuring gateways may comprise protocol definitions and/or templates GWSF 310 may use to communicate configuration information to gateways in a format the gateways can understand. Protocol definitions may be defined, for example, by semantic descriptions to enable GWSF functions to take the described protocols into use by processing the semantic descriptions. Responsive to determining that the database has no information on the local area network accessed by UE 110, GWSF 310 may be configured to communicate with local gateway 160 and request at least one method capable of configuring local gateway 160. Responsive to the request, local gateway 160 may be configured to advise GWSF 310 how GWSF 310 can configure local gateway 160, for example by providing the requested method. Responsive to determining that the database has no information on the local area network accessed by UE 110 and a failure to obtain a method capable of configuring local gateway 160 by requesting, GWSF 310 may be configured to configure UE 110 to cause at least a part of local route traffic from UE 110 to be tunneled to an operator gateway 320. In an embodiment, GWSF 310 is in this case configured to configure UE 110 to cause a part of the local route traffic of UE 110 to be tunneled to operator gateway 320, for example by providing at least one traffic template to define traffic to be tunneled to operator gateway 320. GWSF 310 may configure UE 110 via either the local route or via the cellular route. Local route traffic from UE 110 not tunneled to an operator gateway 320 may be sent directly to an external network such as the Internet.

Determining whether at least one method capable to configure, for example, local gateway 160 can be obtained may comprise firstly searching a database and secondly requesting at least one method from the local gateway 160. A determination that a database doesn't comprise a method and a failure to obtain a method by querying constitutes an example of a determination that at least one method to configure local gateway 160 cannot be obtained.

The database may be comprised in GWSF 310, or it may be comprised in a central database shared by a plurality of operators. A shared database may be comprised in a different domain than the network of the cellular operator. The database may reflect contractual agreements between network operators and define the extent to which GWSF 310 is enabled to configure the local area networks. The database may comprise methods enabling GWSF functions of operators to control local area networks of different types.

Responsive to finding information in the database on the local area network accessed by UE 110 or to obtaining a method by requesting, GWSF 310 may be configured to contact the local area network, for example GWSF 310 may be configured to contact local gateway 160. GWSF 310 may request that local gateway 160 configure parameters relating to UE 110. For example, GWSF 310 may request local gateway 160 to collect statistics on local route traffic of UE 110 and report it to the GWSF 310 or another node, for example a node comprised in a network operated by the operator of GWSF 310. Responsive to determining that a subscription of UE 110 comprises access restrictions, GWSF 310 may request that local gateway 160 configure the restriction parameters into use. For example, GWSF 310 may request that local gateway 160 disallow local route traffic between UE 110 and internet sites hosting gambling or pornography. GWSF 310 may provide local gateway 160 a list of disallowed hosts, or local gateway 160 may have access to lists of disallowed hosts. For example, if GWSF 310 indicates UE 110 isn't allowed to access gambling sites, local gateway 160 may access a list of gambling sites and apply filters to block messages between UE 110 and hosts comprised on the list.

GWSF 310 may request the local gateway 160 to re-assign a new IP address to UE 110. GWSF 310 may also or alternatively request local gateway 160 to change dynamic host configuration protocol, DHCP, parameters of UE 110. By controlling the local gateway 160, the cellular operator is enabled to control local route traffic of UE 110 without routing the traffic through the operator's cellular core network.

GWSF 310 may configure traffic parameters relating to the local route also to UE 110. GWSF 310 may effect this configuration via either the cellular route or via the local route. When providing information via the cellular route, the local area network is not capable of modifying the information en route, which may increase the level of control a cellular operator has. GWSF 310 may request and receive from a cellular network accessibility information of UE 110 via the cellular route. For example, GWSF 310 may insert traffic filters similar to those configured to local gateway 160 also to UE 110. GWSF may alternatively insert filters only to UE 110. GWSF may configure bearer or context parameters to UE 110, allowing the operator to control local route traffic of UE 110 also at UE 110. As another example of configuring UE 110, GWSF 310 may indicate that UE 110 may continue to use the local route and local gateway 160. In this case, local area network parameters in the user equipment are configured by confirming them.

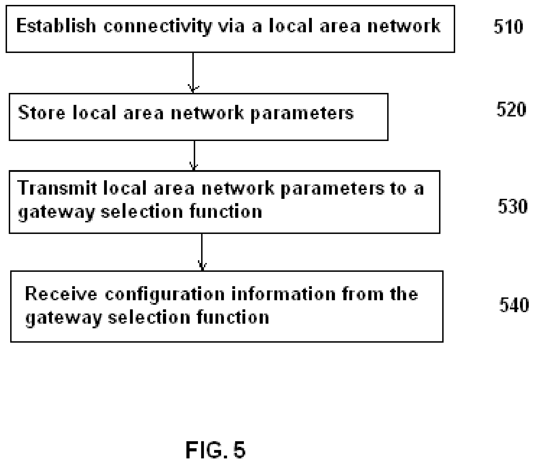

FIGURE 5 is a flowchart of a process in a user equipment according to an example embodiment of the invention; In phase 510 connectivity is established from the user equipment to a local area network. The connectivity may be established based on advice received over a non-local interface such as a cellular network interface, for example. A cellular network may comprise an access network discovery and selection function, ANDSF, configured to advise user equipments on interfaces to contact. Alternatively the user equipment may be configured to discover and attach to a local interface autonomously. In phase 520, the user equipment may store information relating to a local area network the user equipment has established connectivity to. The information may comprise at least one of: an internet protocol, IP, address of UE 110 via the local area network, a network mask, a default gateway identity, a name-to-address mapping server identity, a local area network identity, and location information.

In phase 530, the user equipment may at least in part transmit the information relating to the local area network to a gateway selection function. The gateway selection function may reside in a home network or a visited network of a subscriber of the user equipment, for example. The transmitting may take place over a cellular interface or via the local area network the user equipment has attached itself to. In phase 540, the user equipment may receive configuration information from the gateway selection function. The receiving may take place over a cellular interface or via the local area network the user equipment has attached itself to. The configuration information may comprise at least one of a traffic filter, charging advice, a bandwidth quota or bearer or context parameters. Responsive to receiving the configuration information, the user equipment may take the configuration information into use and apply it to subsequent traffic sent and received via the local route.

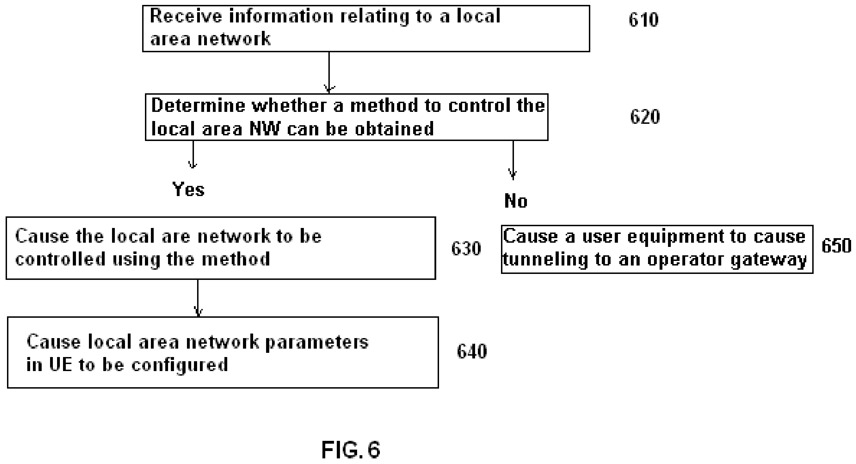

FIGURE 6 is a flowchart of a process in a gateway selection function according to an example embodiment of the invention. In phase 610, information relating to a local area network is received in a gateway selection function, the information originating in a user equipment. The information may be conveyed from the user equipment to the gateway selection function via a local area network or via a cellular network. In phase 620, it may be determined whether at least one method to control the local area network can be obtained. The obtaining may comprise that the gateway selection function queries a database for a suitable method, wherein the local area network may be identified using at least in part the received information. The database may be comprised in the gateway selection function or it may be external to it. The database may be a shared database in another domain, wherein the database service may be offered to the operator of the gateway selection function on a commercial or collaborative basis. The determining may alternatively or additionally comprise that the gateway selection function queries the local area network for a suitable method. For example, the gateway selection function may query for a template that it may use to transmit configuration data to the local area network. Responsive to the determination, the gateway selection function may obtain at least one method to control the local area network or alternatively to conclude that one cannot be obtained.

In phase 630, the gateway selection function may configure the local area network by using the obtained method. The configuring may comprise controlling. For example traffic filters may be insterted between a user equipment and external networks, and/or the gateway selection function may request traffic statistics concerning data exchanged between user equipment and external networks. In phase 640, the gateway selection function may configure local area network parameters in the user equipment. This configuring may take place via either the local area network or via a cellular network. The configuration parameters sent to the user equipment may comprise, for example, context and/or bearer parameters and traffic filters. If in phase 620 it was determined that a method could not be obtained, the process may move to optional phase 650. In phase 650 the gateway selection function may cause the user equipment to cause at least part of its local route traffic to be tunneled to an operator gateway.

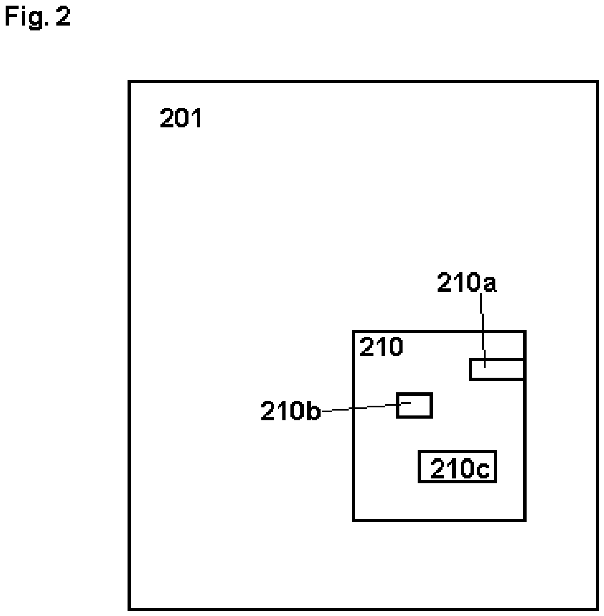

FIG. 2 illustrates an example apparatus 201 capable of supporting embodiments of the present invention. The apparatus may correspond to UE 110 of Fig. 1, for example. The apparatus is a physically tangible object, for example a mobile telephone, personal digital assistant, data dongle or a similar device. The apparatus may comprise a control apparatus 210, for example a digital signal processor (DSP), processor, field-programmable gate array (FPGA), application-specific integrated circuit (ASIC), chipset or controller. The apparatus may further comprise transceiver circuitry 210a configured to enable the apparatus 201 to connect to a network. The apparatus may comprise memory 210b configured to store information, for example information on a local area network. The memory may be solid-state memory, dynamic random access memory (DRAM), magnetic, holographic or other kind of memory. The apparatus may comprise logic circuitry 210c configured to access the memory 210b and control the transceiver circuitry 210a. The logic circuitry 210c may be implemented as software, hardware or a combination of software and hardware. The logic circuitry 210c may execute program code stored in memory 210b to control the functioning of the apparatus 201 and cause it to perform functions related to embodiments of the invention. The logic circuitry 210c may be configured to initiate functions in the apparatus 201, for example the sending of data units via the transceiver circuitry 210a. The logic circuitry 210c may be control circuitry. The transceiver circuitry 210a, memory 210b and/or logic circuitry 210c may comprise hardware and/or software elements comprised in the control apparatus 210. Memory 210b may be comprised in the control apparatus 210, be external to it or be both external and internal to the control apparatus 210 such that the memory is split to an external part and an internal part. If the apparatus 201 does not comprise a control apparatus 210 the transceiver circuitry 210a, memory 210b and logic circuitry 210c may be comprised in the apparatus as hardware elements such as integrated circuits or other electronic components. The same applies if the apparatus 201 does comprise a control apparatus 210 but some, or all, of the transceiver circuitry 210a, memory 210b and logic circuitry 210c are not comprised in the control apparatus 210. In embodiments where apparatus 201 is a mobile user equipment, apparatus 201 may comprise an antenna.

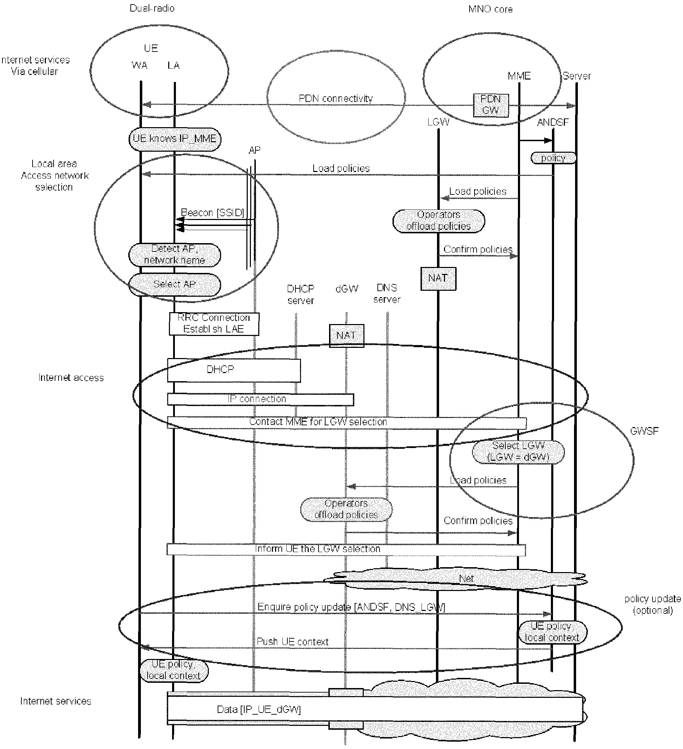

FIGURE 7 is a signaling diagram relating to an example embodiment of the invention. FIG 7 comprises messages all of which are not mandatory features of the invention, and FIG 7 may not illustrate a particularly advantageous embodiment. FIG 7 illustrates an embodiment to which the invention is not limited. Some phases of signaling may be effected in a different order than illustrated. Time flows from the top to the bottom of the signaling diagram.

The topmost part of FIG 7, labeled "Internet access via cellular", relates to a user equipment, UE, accessing internet services via a cellular route according to LTE technology. A wide area, WA, interface in the UE may be configured to communicate with a LTE system. Internet services are obtained in the UE by means of a packet data network, PDN, connection between the UE and a LTE core network comprising at least a packet data network gateway, PDN GW, and a mobility management entity, MME. The PDN GW and MME are comprised in a mobile network operator, MNO, core network. From this signaling, the UE gains knowledge of the IP address of the MME, labeled IP_MME.

In the second part of FIG 7, labeled "Local area Access network selection", it is illustrated how a UE chooses a local area network to attach to. Initially , UE may obtain access selection policies, for example from an ANDSF function via any of the available network connections it may have. The local radio access functionality within the UE, labeled LA, may be configured to receive beacons from local area network local access points, labeled AP in FIG 7. Based at least in part on the received access selection policies and contents of received beacons, UE may be configured to select from among a plurality of accessible local area networks. Beacons may comprise, for example, SSID and/or local network name information. Local area networks may be configured according to wireless local area network, WLAN, standards, for example.

In the third part of FIG 7, labeled "Internet access", the UE accesses a network, for example an Intranet or Internet, via a selected local route gateway. Initially in this part, the UE establishes a connection to a selected access point. The connection, for example, may be established between the UE and a wireless local area network, WLAN, local area evolution, LAE, local area radio network, or other local area radio network access point or base station. The UE may then be configured to obtain configuration information from a dynamic host configuration protocol, DHCP, server. UE may then be configured to participate in the establishment of an IP connection to a default gateway, labeled dGW in FIG 7. The dGW may be configured to utilize a network address translation, NAT, function. The NAT function may manage IP connections in the subnet domain of the selected local area network for example to control private IP addresses. The UE may then be configured to contact a MME in a cellular network to obtain assistance in selecting a local gateway, LGW. The MME may be, responsive to the message from the UE, configured to check if it can configure, control, or otherwise communicate with the dGW to the extent that dGW could operate as a LGW. The MME may be, responsive to the message from the UE, configured to run a local gateway, LGW, selection algorithm whereby the MME may select the dGW as the LGW. The MME may be configured to configure the dGW by loading operator policies into the dGW, which the dGW may be configured to take into use and acknowledge to the MME. Responsive to the acknowledgement, the MME may be configured to configure the UE by confirming it may continue to use the dGW. In this context, the MME may perform at least some functionalities of a gateway selection function, GWSF, as described in this document. As a special embodiment, the MME could negatively acknowledge that a UE is not recommended to use that dGW.

In the fourth part of FIG 7, labeled "Internet Services", the UE accesses network services, for example Internet or Intranet services via the network labeled Net in Fig.7, through the dGW, which acts as a local gateway, LGW. The UE may communicate with the MNO core by means of a network labeled "Net" in FIG 7. The UE may be configured to request policy updates from an ANDSF function, and responsively to receive new policies in a UE context message, for example, and to take the new policies into use. Using the new policies, the UE may be configured to form a data connection to a server in an external network, for example the Internet or an Intranet, via the dGW acting as LGW. The dGW may provide NAT services between the local area network and external networks. The IP address of the UE at the dGW is labelled as IP_UE_dGW in FIG 7.

Without in any way limiting the scope, interpretation, or application of the claims appearing below, a technical effect of one or more of the example embodiments disclosed herein is that an operator is enabled to control a subscriber's local route traffic without routing the local route traffic through a network of the operator. Another technical effect of one or more of the example embodiments disclosed herein is that a GWSF can configure local route parameters of a user equipment via the cellular route, rendering it impossible for a local network operator to tamper with the configuration. Another technical effect of one or more of the example embodiments disclosed herein is that operators can share methods to control how local area networks handle traffic to/from their subscribers when they are using a local route.

Embodiments of the present invention may be implemented in software, hardware, application logic or a combination of software, hardware and application logic. The software, application logic and/or hardware may reside on memory 21 0b, for example. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable non-transitory storage medium that may be any media or means that can contain or store the instructions for use by or in connection with an instruction execution system, apparatus, or device, such as a computer. The scope of the invention comprises computer programs configured to cause methods according to embodiments of the invention to be performed.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. A system comprising:
a user equipment (110), comprising:
at least one processor (210c); and
at least one memory (210b) including computer program code, wherein the at least one memory and the computer program code are configured, with the at least one processor (210c), to cause the user equipment (110) to at least:
- establish connectivity to a local area network;
- receive a traffic template wherein the traffic template defines local route traffic to be tunnelled from the user equipment (110) to an operator gateway;
- route local route traffic matching the traffic template from the user equipment (110) to the operator gateway, and send local route traffic not matching the traffic template directly to an external network,
wherein the system is **characterized by** comprising a gateway selection function (310) configured to :
- receive, from the user equipment (110), information relating to the local area network;
- query, using the information relating to the local area network, a database for a method to control the local area network; and
- if no method is received from the database in response to the query, provide the traffic template to the user equipment (110).

2. The system according to claim 1, wherein the operator gateway is a cellular communication network node.

3. The system according to claim 1 or 2, wherein the user equipment (110) is configured to receive the traffic template via a cellular communication route.

4. A method, comprising:
- establish, at user equipment (110), connectivity to a local area network,
- receive, at the user equipment (110), a traffic template, wherein the traffic template defines local route traffic to be tunnelled from the user equipment (110) to an operator gateway;
- route local route traffic matching the traffic template from the user equipment (110) to the operator gateway, and send local route traffic not matching the traffic template directly to an external network ;
the method **characterized by**
- receiving, at a gateway selection function (310) from the user equipment (110), information relating to the local area network;
- querying, by the gateway selection function (310) using the information relating to the local area network, a database for a method to control the local area network; and
- based on no method being received from the database, providing the traffic template to the user equipment (110).

5. The method according to claim 4, wherein the operator gateway is a cellular communication network node.

6. The method according to claim 4 or 5, wherein the user equipment (110) is configured to receive the filter criterion via a cellular communication route.

## Patentansprüche

1. System, das Folgendes umfasst:
eine Teilnehmereinrichtung (110), die Folgendes umfasst:
mindestens einen Prozessor (210c) und
mindestens einen Speicher (210b), der Computerprogrammcode beinhaltet, wobei der mindestens eine Speicher und der Computerprogrammcode dazu ausgelegt sind, die Teilnehmereinrichtung (110) mit dem mindestens einen Prozessor (210c) mindestens zu Folgendem zu veranlassen:
- Aufbauen einer Konnektivität zu einem lokalen Netzwerk;
- Empfangen einer Verkehrsvorlage, wobei die Verkehrsvorlage lokalen Routenverkehr definiert, der von der Teilnehmereinrichtung (110) über einen Tunnel zu einem Betreibergateway zu leiten ist;
- Routen von lokalem Routenverkehr, der mit der Verkehrsvorlage übereinstimmt, von der Teilnehmereinrichtung (110) zum Betreibergateway und Senden von lokalem Routenverkehr, der nicht mit der Verkehrsvorlage übereinstimmt, direkt an ein externes Netzwerk,
wobei das System **dadurch gekennzeichnet ist, dass** es eine Gatewayauswahlfunktion (310) umfasst, die zu Folgendem ausgelegt ist:
- Empfangen von Informationen, die das lokale Netzwerk betreffen, von der Teilnehmereinrichtung (110);
- Abfragen einer Datenbank zu einem Verfahren zum Steuern des lokalen Netzwerks unter Verwendung der das lokale Netzwerk betreffenden Informationen und
- Bereitstellen der Verkehrsvorlage für die Teilnehmereinrichtung (110), wenn in Reaktion auf die Abfrage kein Verfahren von der Datenbank empfangen wird.

2. System nach Anspruch 1, wobei das Betreibergateway ein Mobilfunkkommunikationsnetzwerkknoten ist.

3. System nach Anspruch 1 oder 2, wobei die Teilnehmereinrichtung (110) dazu ausgelegt ist, die Verkehrsvorlage via eine Mobilfunkkommunikationsroute zu empfangen.

4. Verfahren, das Folgendes umfasst:
- Aufbauen einer Konnektivität zu einem lokalen Netzwerk an einer Teilnehmereinrichtung (110),
- Empfangen einer Verkehrsvorlage an einer Teilnehmereinrichtung (110), wobei die Verkehrsvorlage lokalen Routenverkehr definiert, der von der Teilnehmereinrichtung (110) über einen Tunnel zu einem Betreibergateway zu leiten ist;
- Routen von lokalem Routenverkehr, der mit der Verkehrsvorlage übereinstimmt, von der Teilnehmereinrichtung (110) zum Betreibergateway und Senden von lokalem Routenverkehr, der nicht mit der Verkehrsvorlage übereinstimmt, direkt an ein externes Netzwerk;
wobei das Verfahren durch Folgendes gekennzeichnet ist
- Empfangen von Informationen, die das lokale Netzwerk betreffen, an einer Gatewayauswahlfunktion (310) von der Teilnehmereinrichtung (110);
- Abfragen einer Datenbank zu einem Verfahren zum Steuern des lokalen Netzwerks durch die Gatewayauswahlfunktion (310) unter Verwendung der das lokale Netzwerk betreffenden Informationen und
- Bereitstellen der Verkehrsvorlage für die Teilnehmereinrichtung (110) darauf basierend, dass von der Datenbank kein Verfahren empfangen wurde.

5. Verfahren nach Anspruch 4, wobei das Betreibergateway ein Mobilfunkkommunikationsnetzwerkknoten ist.

6. Verfahren nach Anspruch 4 oder 5, wobei die Teilnehmereinrichtung (110) dazu ausgelegt ist, das Filterkriterium via eine Mobilfunkkommunikationsroute zu empfangen.

## Revendications

1. Système comprenant :
un équipement utilisateur (110), comprenant :
au moins un processeur (210c) ; et
au moins une mémoire (210b) comportant un code de programme d'ordinateur, dans lequel l'au moins une mémoire et le code de programme d'ordinateur sont configurés, conjointement avec l'au moins un processeur (210c), pour amener l'équipement utilisateur (110) à au moins :
- établir une connectivité avec un réseau local ;
- recevoir un modèle de trafic, le modèle de trafic définissant un trafic de voie locale à tunneliser depuis l'équipement utilisateur (110) vers une passerelle d'opérateur ;
- acheminer un trafic de voie locale correspondant au modèle de trafic depuis l'équipement utilisateur (110) vers la passerelle d'opérateur, et envoyer le trafic de voie locale ne correspondant pas au modèle de trafic directement à un réseau externe,
le système étant **caractérisé en ce qu'**il comprend une fonction de sélection de passerelle (310) configurée pour :
- recevoir, de l'équipement utilisateur (110), des informations relatives au réseau local ;
- interroger, à l'aide des informations relatives au réseau local, une base de données pour un procédé de contrôle du réseau local ; et
- si aucun procédé n'est reçu de la base de données en réponse à l'interrogation, fournir le modèle de trafic à l'équipement utilisateur (110).

2. Système selon la revendication 1, dans lequel la passerelle d'opérateur est un noeud de réseau de communication cellulaire.

3. Système selon la revendication 1 ou 2, dans lequel l'équipement utilisateur (110) est configuré pour recevoir le modèle de trafic via une voie de communication cellulaire.

4. Procédé, comprenant :
- l'établissement, au niveau de l'équipement utilisateur (110), d'une connectivité à un réseau local.
- la réception, au niveau de l'équipement utilisateur (110), d'un modèle de trafic, le modèle de trafic définissant un trafic de voie locale à tunneliser depuis l'équipement utilisateur (110) vers une passerelle d'opérateur ;
- l'acheminement d'un trafic de voie locale correspondant au modèle de trafic depuis l'équipement utilisateur (110) vers la passerelle d'opérateur, et l'envoi d'un trafic de voie locale ne correspondant pas au modèle de trafic directement à un réseau externe ;
le procédé étant **caractérisé par**
- la réception, au niveau d'une fonction de sélection de passerelle (310), de l'équipement utilisateur (110), d'informations relatives au réseau local ;
- l'interrogation, par la fonction de sélection de passerelle (310) à l'aide des informations relatives au réseau local, d'une base de données pour un procédé de contrôle du réseau local ; et
- si aucun procédé n'est reçu de la base de données, la fourniture du modèle de trafic à l'équipement utilisateur (110) .

5. Procédé selon la revendication 4, dans lequel la passerelle d'opérateur est un noeud de réseau de communication cellulaire.

6. Procédé selon la revendication 4 or 5, dans lequel l'équipement utilisateur (110) est configuré pour recevoir le critère de filtrage via une voie de communication cellulaire.
